# EUROPÄISCHE PATENTANMELDUNG

(11) **EP 1 136 768 A2**
(43) Veröffentlichungstag der Anmeldung: **26.09.2001**
(21) Anmeldenummer: 01106507.5
(22) Anmeldetag: 15.03.2001
(51) Int. Cl.: F25B 15/10

(54) **Diffusionsabsorptionsanlage**

(30) Priorität: 22.03.2000 DE 10014126
(71) Anmelder: Buderus Heiztechnik GmbH, D-35576 Wetzlar (DE)
(72) Erfinder: Schulte, Uwe, 35037 Marburg (DE); Korinth, Christoph, 57555 Mudersbach (DE); Heitze, Edgar, 57234 Wilnsdorf (DE); Vloon, Paulus Jacobus, 7422 RM Deventer (NL); Lammert Wierenga, Hendrik Jacob, 8196 KC Welsum (NL)

(57) **Zusammenfassung**

Die Erfindung betrifft eine Diffusionsabsorptionsanlage mit einem Kälte- bzw. Lösungsmittelkreislauf, einem Kocher (1), einem Absorber (2), einem Rektifikator (5) mit Dreifach-Wärmetauscher, einem Verdampfer (3), einem Gas-/Gas-Wärmetauscher (4), einem Kondensator (6) sowie einem Reservoir (7) für das Kälte- bzw. Lösungsmittel.

Mit der Erfindung soll der Aufbau einer Diffusionsabsorptionsanlage optimiert und der Fertigungsaufwand reduziert werden.

Die Diffusionsabsorptionsanlage ist dadurch gekennzeichnet, dass Kocher (1) und Rektifikator (5) und/oder das Reservoir (7) zu einem ersten Bauteil sowie Absorber (2), Verdampfer (3) und Gas-/Gas-Wärmetauscher (4) zu einem zweiten Bauteil zusammengefasst und über Leitungen (8) miteinander verbunden sind.

## Beschreibung

Die Erfindung betrifft eine Diffusionsabsorptionsanlage nach dem Oberbegriff des Patentanspruches 1.

Diffusionsabsorptionsanlagen sind als Kleinkälteanlagen zur Verwendung in Haushaltskühlschränken seit langem bekannt. Sie können mit einer entsprechenden konstruktiven Gestaltung auch als Wärmepumpen zu Heiz- oder Kühlzwecken eingesetzt werden. In diesen Anlagen wird das Kältemittel Ammoniak (NH₃) und Wasser als Stoffpaar eingesetzt. Dabei stellt das Wasser als Lösungsmittel den absorbierenden Stoff dar, wobei als druckausgleichendes Trägergas in der Regel Wasserstoff oder Helium verwendet wird. Als Arbeitsmedium im Kreisprozess setzt sich das Ammoniak-/Wasser-Gemisch bei Wärmezufuhr durch Temperatur- und Konzentrationsunterschiede in Bewegung.

Die Wärmezufuhr erfolgt in einem Kocher. Durch Sieden werden Gasblasen aus der NH₃-reichen Lösung ausgetrieben. Der Wasseranteil in diesem Gasstrom wird im Rektifikator abgeschieden bzw. zurückgeführt, so dass fast nur NH₃-Dampf zum Kondensator strömt. Dabei muss die Gasblasenpumpe so ausgebildet sein, dass sie die Flüssigkeit auf eine erhebliche Höhe pumpt, um die nötige Antriebskraft zu erzeugen. Der hochreine Ammoniakdampf kondensiert und gibt dabei die Kondensationswärme an das Heizungswasser ab. Anschließend strömt das flüssige Ammoniak nach unten in den Verdampfer. In der Helium-/Ammoniak-Atmosphäre verdampft das Ammoniak unter Aufnahme von Umgebungsenergie. Danach gelangt das Gasgemisch durch einen Gas-/Gas-Wärmetauscher und strömt zum Absorber, wo das gasförmige Ammoniak von der NH₃-armen Ammoniak-/ Wasser-Lösung absorbiert wird und die Absorptionswärme an das Heizungswasser abgibt, bevor der geräuschfreie Prozess wieder neu beginnt.

Sowohl die EP 0 413 791 B1 als auch die EP 0 419 606 B1 zeigen eine Diffusionsabsorptionsanlage mit den einzelnen Aggregaten. Diese sind jeweils als separate Bauteile ausgeführt und über Leitungen miteinander verbunden. Weil der Arbeitsdruck bei derartigen Anlagen mehr als 20 bar beträgt, müssen alle Aggregate und Leitungen entsprechend druckfest gestaltet sein. Daher ergibt sich bei diesem Aufbau eine große Anzahl von Schweißnähten, die sehr hochwertig bzw. genau ausgeführt sein müssen. Insgesamt entsteht für die mindestens fünf einzelnen Druckbehälter und Leitungen ein erheblicher Material-, Fertigungs- und Prüfaufwand.

Bei der bekannten Ausführungsform ist beispielsweise der Rektifikator für seine Funktion als Dreifach-Wärmetauscher, mit konzentrischen Rohrspiralen und drei ineinander liegenden Hohlräumen, außen um den Druckbehälter des Kochers gewickelt, und nur über Leitungen an die entsprechenden Zonen in dessen Innenraum angeschlossen. Weiterhin beschreibt die CH 678 104 A5 ein Reservoir als separates Bauteil mit Anschlussleitungen zur Integration in die Anlage gemäß EP 0 413 791 B1 und EP 0 419 606 B1. Außerdem zeigt die CH 678 102 A5 ein Filter mit Düsen an den einmündenden Leitungen, welches an den Absorber bzw. den Verdampfer gekoppelt und in einem eigenen Druckbehälter untergebracht ist.

Der Erfindung liegt die Aufgabe zugrunde, den Aufbau einer Diffusionsabsorptionsanlage zu optimieren und dadurch den Fertigungsaufwand zu reduzieren.

Erfindungsgemäß wird dies mit den Merkmalen des Patentanspruches 1 gelöst. Vorteilhafte Weiterbildungen sind den Unteransprüchen zu entnehmen.

Die Diffusionsabsorptionsanlage ist dadurch gekennzeichnet, dass Kocher und Rektifikator und/oder das Reservoir für das Kälte- bzw. Lösungsmittel zu einem ersten Bauteil sowie Absorber, Verdampfer und Gas-/Gas-Wärmetauscher zu einem zweiten Bauteil zusammengefasst und über Leitungen miteinander verbunden sind.

Außerdem können die beiden vorgenannten Bauteile auch zu einer einzigen gemeinsamen Baueinheit zusammengefasst werden. Der Kondensator kann dabei in das erste oder zweite Bauteil und der Rektifikator in den Kocher integriert sein. Da dieser Dreifach-Wärmetauscher insbesondere aus einer aufwändigen Wicklung von mehreren konzentrischen Rohren besteht, lässt sich dessen Herstellung mit geringeren Wandstärken oder dem Ersetzen eines Rohrkörpers durch Behälterwände vereinfachen.

Somit sind alle Bauteile bzw. die gesamte Baueinheit von einer druckbeständigen Hülle umgeben, die sich bei herkömmlichen Anlagen auf viele einzelne Behälter aufteilt. Selbst kleinere Funktionseinheiten, wie das dem Verdampfer und/oder Absorber vorgeschaltete Filter mit Düsen oder das Reservoir, lassen sich wahlweise in einer Zuleitung oder innerhalb des umgebenden Behälters anordnen. Dann bildet die Rohrwand oder die Außenwand des Verdampfers bzw. Absorbers den Druckkörper.

Um insgesamt eine geringere Bauhöhe zu erreichen, können Absorber und Verdampfer nebeneinander angeordnet sein. Dabei erstreckt sich der Absorber in vertikaler Richtung mit seinem oberen Bereich mindestens bis auf das Niveau des unteren Bereiches des Verdampfers. Beide Bauteile besitzen Rohrwicklungen, welche dann beispielsweise mit einem größeren Radius ausgeführt werden können, so dass bei einem gleichbleibend kompakten Aufbau die Leistung gesteigert werden kann. Alternativ dazu ist es möglich, den Absorber und den Verdampfer ringförmig übereinander liegend um den Kocher anzuordnen. Dabei bildet der Kocher jeweils das Zentrum des Behälters oder durchdringt dieses. .

Mit dem erfindungsgemäßen Aufbau der Diffusionsabsorptionsanlage wird der Material-, Fertigungs- und Prüfaufwand deutlich reduziert. Insbesondere sind nur noch wenige hochwertig auszuführende Schweißnähte erforderlich, die beispielsweise zum Fügen der Außenwand eines Behälters, d. h. zum Einfassen mehrerer Bauteile, dienen. Auch der Aufwand für die Verrohrung sinkt, weil nur noch die Rohrleitungen zum Verbinden der einzelnen Behälter druckbelastet sind.

Im Behälterinneren können Baugruppen mit einfacheren Verbindungstechniken angeschlossen werden. Je nach Anwendungsfall erfüllen Press- oder Steckverbindungen ihren Zweck, da sogar geringe Leckströme, wie zum Beispiel zwischen der NH₃-armen und - reichen Lösung, die Anlagenfunktion nicht beeinträchtigen.

Außerdem befinden sich alle Schweißnähte an gut zugänglichen Stellen und lassen sich an den Behälterwänden bzw. Rohrleitungen gut anbringen und kontrollieren. Dies begünstigt eine Kosten sparende, maschinelle Großserienproduktion mit fertigungsgerechtem Aufbau und Montagezeitersparnis.

Die Zeichnung stellt ein Ausführungsbeispiel der Erfindung dar. Eine Diffusionsabsorptionsanlage zeigt:

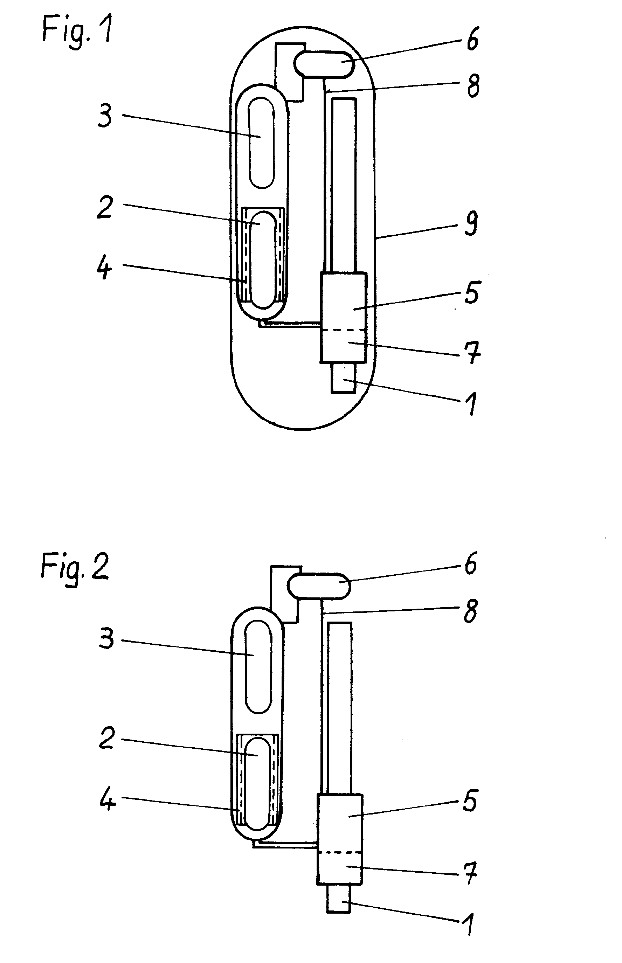

- Fig. 1:: Mit allen Bauteilen in einem gemeinsamen Druckbehälter und
- Fig. 2:: mit jeweils mehreren zusammengefassten Bauteilen in zwei Druckbehältern und einem einzeln angeordneten Kondensator.

Die Diffusionsabsorptionsanlage besteht aus einem Kocher 1, einem Absorber 2, einem Verdampfer 3, einem Gas-/Gas-Wärmetauscher 4, einem Rektifikator 5, einem Kondensator 6, einem Reservoir 7 für das Kälte- bzw. Lösungsmittel sowie Leitungen 8 für den Kälte- bzw. Lösungsmittelkreislauf. Wahlweise umgibt eine druckbeständige Hülle 9 die gesamte Anordnung und/oder es besitzen die einzelnen, zusammengefassten Bauteile selbst einen derartigen Mantel.

## Patentansprüche

1. Diffusionsabsorptionsanlage mit einem Kälte- bzw. Lösungsmittelkreislauf, einem Kocher, einem Absorber, einem Rektifikator, einem Verdampfer, einem Gas-/Gas-Wärmetauscher, einem Kondensator sowie einem Reservoir für das Kälte- bzw. Lösungsmittel,
**dadurch gekennzeichnet, dass** Kocher (1) und Rektifikator (5) und/oder das Reservoir (7) zu einem ersten Bauteil sowie Absorber (2), Verdampfer (3) und Gas-/Gas-Wärmetauscher (4) zu einem zweiten Bauteil zusammengefasst und über Leitungen (8) miteinander verbunden sind.

2. Diffusionsabsorptionsanlage nach Anspruch 1,
**dadurch gekennzeichnet, dass** die beiden Bauteile zu einer einzigen Baueinheit zusammengefasst sind.

3. Diffusionsabsorptionsanlage nach Anspruch 1,
**dadurch gekennzeichnet, dass** der Kondensator (6) in das erste oder zweite Bauteil integriert ist.

4. Diffusionsabsorptionsanlage nach den Ansprüchen 1 bis 3,
**dadurch gekennzeichnet, dass** Absorber (2) und Verdampfer (3) nebeneinander angeordnet sind, wobei sich der Absorber (2) in vertikaler Richtung mit seinem oberen Bereich mindestens bis auf das Niveau des unteren Bereiches des Verdampfers (3) erstreckt.

5. Diffusionsabsorptionsanlage nach den Ansprüchen 1 bis 3,
**dadurch gekennzeichnet, dass** Absorber (2) und Verdampfer (3) ringförmig übereinander liegend um den Kocher (1) angeordnet sind, welcher dabei jeweils das Zentrum bildet oder dieses durchdringt.

6. Diffusionsabsorptionsanlage nach den Ansprüchen 1 bis 5,
**dadurch gekennzeichnet, dass** der Rektifikator (5) in den Kocher (1), vorzugsweise in dessen Wände, integriert ist.

7. Diffusionsabsorptionsanlage nach den Ansprüchen 1 bis 6,
**dadurch gekennzeichnet, dass** dem Verdampfer (3) und/oder Absorber (2) ein Filter mit Düsen vorgeschaltet ist, welches wahlweise in der Zuleitung oder innerhalb des umgebenden Behälters angeordnet ist.

8. Diffusionsabsorptionsanlage nach den Ansprüchen 1 bis 7,
**dadurch gekennzeichnet, dass** jedes einzelne Bauteil bzw. die gesamte Baueinheit von einer druckbeständigen Hülle (9) umgeben ist.
